# EUROPEAN PATENT SPECIFICATION

(11) **EP 3 181 960 B1**
(45) Date of publication and mention of the grant of the patent: **01.04.2020**
(21) Application number: 15825096.9
(22) Date of filing: 22.07.2015
(51) Int. Cl.: F16K 39/02, G05D 16/06, G05D 16/02

(54) **BALANCED VALVE ELEMENT AND PRESSURE REGULATING VALVE**
AUSGEGLICHENES VENTILELEMENT UND DRUCKREGELVENTIL
ÉLÉMENT DE SOUPAPE ÉQUILIBRÉE ET SOUPAPE DE RÉGULATION DE PRESSION

(30) Priority: 22.07.2014 CN 201410372723; 22.07.2014 CN 201420426115 U
(43) Date of publication of application: 21.06.2017
(73) Proprietor: Fisher Jeon Gas Equipment (Chengdu) Co. Ltd., Sichuan 610045 (CN)
(72) Inventor: ZHOU, Biao, Sichuan 610045 (CN)
(74) Representative: Petraz, Gilberto Luigi
(86) International application number: PCT/CN2015/084848
(87) International publication number: WO 2016/011951

(56) References cited:
- CN-A- 101 625 033
- CN-U- 202 327 281
- CN-U- 203 656 339
- CN-Y- 2 530 117
- CN-Y- 2 789 520
- FR-A- 1 331 025
- GB-A- 286 249
- SU-A1- 556 224
- US-A- 4 721 284
- US-A1- 2010 035 117

## Description

### Field of the Invention

The present invention belongs to the field of fluid control, in particular relates to a balanced valve element and further relates to a pressure regulating valve comprising the balanced valve element.

### Background of the Invention

In pressure regulator design, since inlet pressure acts on a valve seat to produce an additional force, this force directly influence the performance of a pressure regulator product. Therefore, usually a structure of a balanced valve element is designed.

Known pressure regulating valves are described for example in the documents FR 1331025 A and GB 286249 A. A known fluid control valve and a known fuel cell system are also described in the document US 2010/035117 A1.

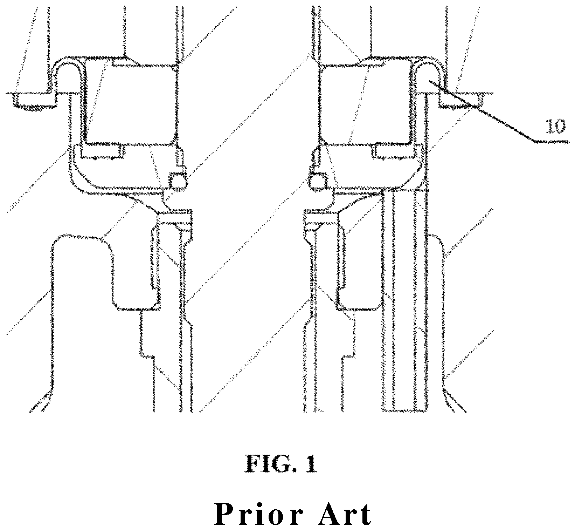

FIG. 1 involves a design method of an existing balanced valve element. In this design method, one end of an n-shaped diaphragm is fixedly connected to a valve rod and the other end of the n-shaped diaphragm is fixedly connected to a valve body or a connecting member (which connects the valve body and an actuator), wherein a fixing member needs to be used at the end of the n-shaped diaphragm which is connected to the valve rod, to fix the n-shaped diaphragm on the valve rod. From FIG. 1, it can be seen that the structure of this balanced valve element is complex, the number of parts is great and the cost is relatively higher.

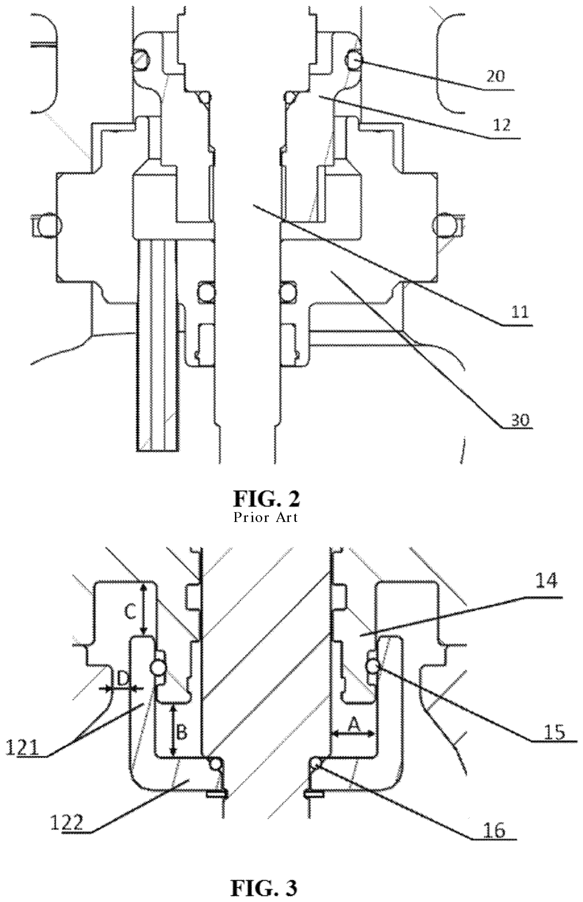

FIG. 2 involves another design method of an existing balanced valve element. This design method adopts a valve rod moving piston structure, and an O-ring 20 is arranged on a piston sleeve to achieve a sealing effect of isolating inlet pressure from outlet pressure. However, this structure does not facilitate guiding (since the O-ring has elasticity, the valve rod will swing). Moreover, it is difficult to guarantee the finish of a cylindrical surface of the piston sleeve in contact with the O-ring . In order to realize guiding, a guide sleeve 30 needs to be additionally arranged. However, in order to install the guide sleeve, an additional space needs to be added in a longitudinal space of a valve, resulting that the structure of the valve is comparatively complex.

### Summary of the Invention

In order to solve the problem that the structure of the existing balanced valve element is complex, the present invention provides a balanced valve element and a pressure regulating valve comprising the balanced valve element.

In one aspect, an embodiment of the present invention discloses a balanced valve element, comprising:
a valve rod;
a piston sleeve fixed on the valve rod; and
a fixing member sleeved between the valve rod and the piston sleeve, the fixing member being arranged in a direction in parallel with an axis of the valve rod.

The above-described piston sleeve comprises a sleeve body and a bottom, the bottom of the piston sleeve is fixed on the valve rod and a first gap is arranged between an inner wall of the sleeve body of the piston sleeve and an outer wall of the valve rod.

A first sealing part is arranged between the above-described fixing member and the sleeve body of the piston sleeve.

In another aspect, an embodiment of the present invention discloses a pressure regulating valve, comprising:
a valve body provided with a valve cavity;
an actuator fixedly connected to the valve body; and
the above-described balanced valve element.

The above-described fixing member is fixedly connected onto the actuator.

The above-described actuator comprises:
a pressure regulating means;
a diaphragm cap assembly comprising a first diaphragm cap and a second diaphragm cap, the first diaphragm cap being connected to the pressure regulating means, the second diaphragm cap being connected to the valve body, and the first diaphragm cap mating with the second diaphragm cap to form a hollow internal portion; and
a diaphragm assembly comprising a diaphragm, the diaphragm being located between the first diaphragm cap and the second diaphragm cap.

The above-described fixing member is fixed on the second diaphragm cap; or the above-described fixing member and the second diaphragm cap are integrally molded.

The above-described pressure regulating valve further comprises a guide sleeve which is fixed on the second diaphragm cap, and the guide sleeve is a ring which surrounds a cross section of the valve rod.

Alternatively, the above-described pressure regulating valve further comprises a guide sleeve which is located on an outer circumference of the valve rod.

The number of the above-described guide sleeves is at least two.

The bottom of the above-described piston sleeve comprises an extension portion which outwardly extends along the axis direction of the valve rod, and the extension portion is closely fixed on the valve rod.

The above-described valve rod and the piston sleeve are integrally molded.

A second sealing part is arranged at a junction between the above-described valve rod and the bottom of the piston sleeve.

According to the embodiments of the present invention, by connecting the fixing member onto the actuator of the valve and arranging the fixing member between the valve rod and the piston sleeve in the axis direction of the valve rod, an effect of guiding the valve rod is achieved and simultaneously a sealing effect of isolating inlet pressure from outlet pressure is achieved. This design has a simpler structure than the related art.

### Description of the Drawings

FIG. 1 illustrates a structural schematic view of a balanced valve element in related art 1;
FIG. 2 illustrates a structural schematic view of a balanced valve element in related art 2;
FIG. 3 illustrates a structural schematic view of a balanced valve element provided by embodiment 1 of the present invention;
FIG. 4 illustrates a structural schematic view of a pressure regulating valve provided by embodiment 1 of the present invention;
FIG. 5 illustrates a structural schematic view of a balanced valve element provided by embodiment 2 of the present invention;
FIG. 6 illustrates a structural schematic view of a balanced valve element provided by embodiment 3 of the present invention.

Description of reference signs: 11-valve rod, 111-first end, 112-second end, 12-piston sleeve, 121-sleeve body, 122-bottom, 123-extension portion, 13-valve seat, 14-fixing member, A-first gap, B-second gap, C-third gap, D-third gap, 15-first sealing part, 16-second sealing part, 17-guide sleeve, 2-valve body, 21-inlet, 22-outlet, 23-valve cavity, 231-first region, 232-second region, 233-valve port, 311-first diaphragm cap, 312-second diaphragm cap, 321-diaphragm, 322-first diaphragm plate, 323-second diaphragm plate, 331-spring, 332-regulating rod, 3321-third end, 3322-fourth end, 4-third sealing part.

### Description of the Embodiments

The technical solution of the present invention will be further described below with reference to the drawings in combination with the specific embodiments.

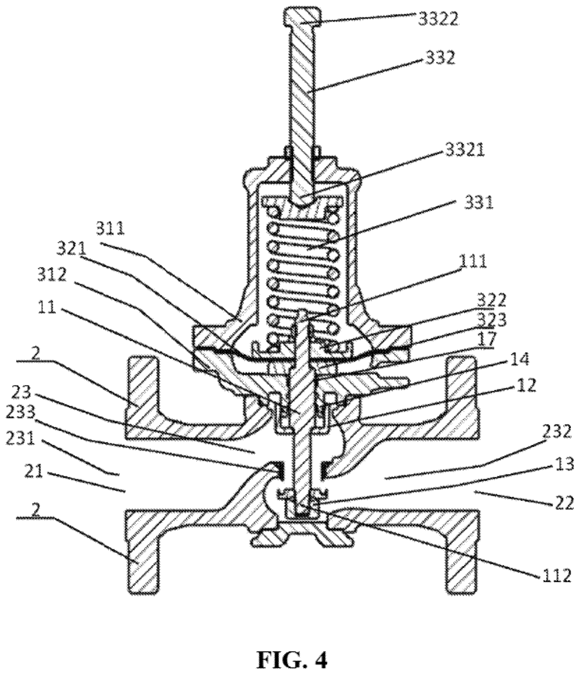

A balanced valve element disclosed by this embodiment is located in a pressure regulating valve. As illustrated in FIG. 4, the pressure regulating valve comprises a valve body, a balanced valve element and an actuator. The valve body 2 comprises an inlet 21, an outlet 22 and a valve cavity 23. The actuator is fixedly connected to the valve body. For the pressure regulating valve provided by this disclosure, inlet pressure may be gas pressure and may also be liquid pressure, and correspondingly, outlet pressure may be gas pressure and may also be liquid pressure.

As illustrated in FIG. 3 and FIG. 4, the balanced valve element comprises a valve rod 11, a piston sleeve 12, a valve seat 13 and a fixing member 14. The valve rod 11 comprises a first end 111 and a second end 112, wherein the first end 111 of the valve rod is arranged in the actuator of the valve and the second end 112 of the valve rod is fixed within the valve seat 13. The valve seat 13 is movably arranged in the valve cavity 23. The piston sleeve 12 comprises a sleeve body 121 and a bottom 122, wherein the bottom 122 of the piston sleeve is fixed on the valve rod 11, and a first gap A is arranged between an inner wall of the sleeve body of the piston sleeve and an outer wall of the valve rod. The fixing member 14 is fixed on the actuator of the valve, and the fixing member 14 is arranged between the valve rod 11 and the piston sleeve 12 along the axis direction of the valve rod. The valve rod 11, the piston sleeve 12 and the valve seat 13 can move along the axis direction of the valve rod.

The fixing member 14 here achieves an effect of guiding the valve rod 11 and simultaneously achieves a sealing effect of isolating the inlet pressure from the outlet pressure. In order to guarantee the sealing effect, a first sealing part 15 may be arranged between the fixing member 14 and the sleeve body 121 of the piston sleeve 12. The first sealing part 15 may be an O-ring and may also be a sealing packing and the like. It needs to be stated that sealing described here is dynamic sealing since the fixing member 14 and the piston sleeve 12 are relatively movable. The inlet pressure is isolated from the outlet pressure since the purpose of the pressure regulating valve is to keep a stable outlet pressure. The inlet pressure is certainly higher than the outlet pressure, if no isolation measure is taken, the outlet pressure will always rise.

In order to guarantee that the valve rod 11, the piston sleeve 12 and the valve seat 13 can move along the axis direction of the valve rod, as illustrated in FIG. 3, in this embodiment, a second gap B is arranged between the fixing member 14 and the bottom 122 of the piston sleeve, a third gap C is arranged between the actuator of the pressure regulating valve and the piston sleeve, and a fourth gap D is arranged between the valve body and the piston sleeve.

The valve cavity 23 comprises a first region 231 in communication with the inlet 21, a second region 232 in communication with the outlet 22, and a valve port 233 communicating the first region 231 with the second region 232. When the valve rod 11 moves, the valve seat 13 moves between the valve port 233 and the second region 232.

The actuator comprises a diaphragm cap assembly, a diaphragm assembly and a pressure regulating means, wherein the diaphragm cap assembly comprises a first diaphragm cap 311 and a second diaphragm cap 312, the first diaphragm cap 311 is connected to the pressure regulating means, the second diaphragm cap 312 is connected to the valve body 2, and the first diaphragm cap 311 mates with the second diaphragm cap 312 to form a hollow internal portion. The diaphragm assembly comprises a diaphragm 321, a first diaphragm plate 322 and a second diaphragm plate 323, wherein the diaphragm 321 is pressed between the first diaphragm plate 322 and the second diaphragm plate 323, the diaphragm 321 is located between the first diaphragm cap 311 and the second diaphragm cap 312, the first diaphragm plate 322 is located within a cavity formed by the diaphragm 321 and the first diaphragm cap 311, and the second diaphragm plate 323 is located within a cavity formed by the diaphragm 321 and the second diaphragm cap 312. The pressure regulating means comprises a spring 331 and a regulating rod 332, wherein the spring 331 is located inside the first diaphragm cap 311, the regulating rod 332 comprises a third end 3321 and a fourth end 3322, the third end 3321 of the regulating rod penetrates through the first diaphragm cap 311 and is in contact with the spring 331, the fourth end 3322 of the regulating rod is suspended in the air, and the regulating rod is fixed on the first diaphragm cap 311.

The first diaphragm plate 322 further achieves an effect of supporting the spring 331 and transmitting spring force. The second diaphragm plate 323 further achieves an effect of isolating the outlet pressure from outside.

Specifically, the first end 111 of the valve rod penetrates through the diaphragm 321 and is fixed on the first diaphragm plate 322. The fixing member 14 is fixed on the second diaphragm cap 312. The fixing member 14 may be integrally molded with the second diaphragm cap 312 , and may also be fixed on the second diaphragm cap 312 as an independent part. As illustrated in FIG. 4, the fixing member 14 and the second diaphragm cap 312 are integrally molded. It needs to be stated that the fixing member 14 is not limited to be fixed on the second diaphragm cap 312 and may be fixed with the actuator or the valve body as long as the scope of the present invention as defined by the appended claims is satisfied.

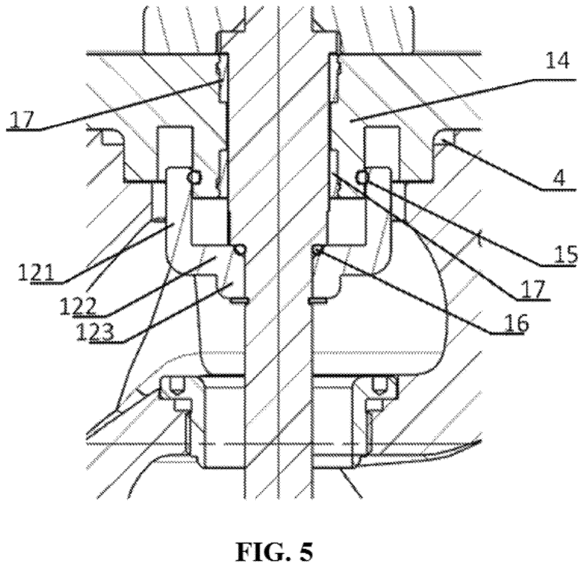

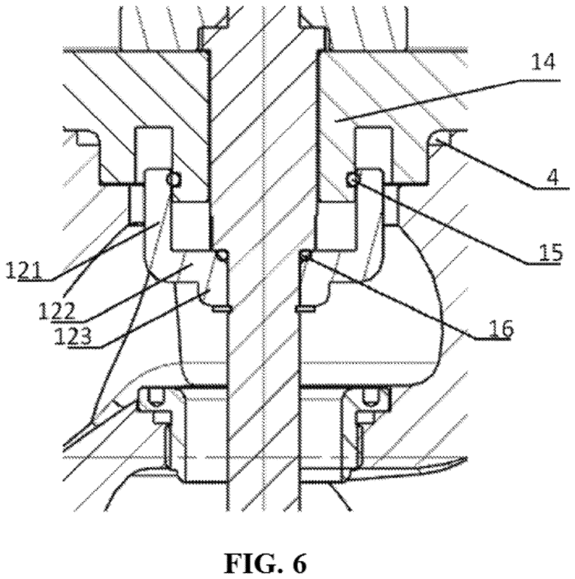

In order to enable the valve rod to move along a straight line to achieve a guiding effect, the pressure regulating valve provided by the embodiment further comprises a guide sleeve 17, the guide sleeve 17 is fixed on the second diaphragm cap 312 and the guide sleeve 17 is a ring which surrounds the cross section of the valve rod. As illustrated in FIG. 5, the number of the guide rings is two. Of course, the number of the guide rings may also be one or more. If a guide surface in contact with the valve rod 11 is sufficiently smooth, there may be no guide ring. FIG. 6 illustrates a balanced valve element which has no guide sleeve. The guide sleeve 17 may be made of materials such as bronze or PTFE, etc. The guide sleeve 17 achieves an effect of guiding the valve rod 11 and further achieves an effect of reducing friction.

Alternatively, the guide sleeve 17 may also be located on an outer circumference of the valve rod 11 (instead of the second diaphragm cap of the actuator) and is approximately located on the outer circumference of a middle portion of the valve rod, wherein the middle portion of the valve rod refers to a portion between the first end 111 of the valve rod and the piston sleeve 12.

During manufacturing, the valve rod 11 and the piston sleeve 12 may be two independent parts and may also be integrally molded. If they are two independent parts, in order to isolate the inlet pressure from the outlet pressure, a second sealing part 16 is arranged at a junction between the valve rod 11 and the bottom 122 of the piston sleeve, so as to achieve a sealing effect. The second sealing part 16 may be an O-ring and may also be a sealing packing and the like. It needs to be stated that sealing here is static sealing since the fixing member 14 and the piston sleeve 12 are relatively stationary. The inlet pressure is isolated form the outlet pressure since the purpose of the pressure regulating valve is to keep a stable outlet pressure. The inlet pressure is certainly higher than the outlet pressure, if no isolation measure is taken, the outlet pressure will always rise.

It needs to be stated that the main effect of the piston sleeve is to bear an upward balancing force to balance downward pressure applied by inlet gas pressure (or inlet liquid pressure) to the valve seat. Therefore, the piston sleeve may also adopt other structures as long as the scope of the present invention is satisfied, and is not limited to the structures of the piston sleeve illustrated in FIG. 3 and FIG. 4. For example, in order to facilitate technological manufacturing, the bottom 122 of the piston sleeve may further comprise an extension portion 123 which outwardly extends along the axis direction of the valve rod. The extension portion 123 is closely fixed on the valve rod 11, as illustrated in FIG. 5 and FIG. 6.

The second diaphragm cap 312 of the actuator and the valve body 2 are fixedly connected through a screw as illustrated in FIG. 4, and may also be fixedly connected by other means. If a contact portion between the second diaphragm cap 312 and the valve body 2 is not well sealed, a third sealing part 4 may be arranged at this contact portion to isolate a medium within the valve body from an external environment, so as to achieve a sealing effect. The third sealing part may be an O-ring and may also be a sealing packing and the like.

The design of the above-mentioned embodiment simplifies the structure of the existing pressure regulating valve (mainly the balanced valve element portion), the number of parts is reduced, thereby the cost is decreased and simultaneously an additional space does not need to be added in a longitudinal direction for the guide sleeve of the valve rod.

As illustrated in FIG. 4, the working principle of the above-mentioned pressure regulating valve is as follow: gas or liquid enters the valve from the inlet along the first region, inlet pressure acts on the valve seat to produce downward pressure and the effect of the balanced valve element is to produce an upward force to balance the downward pressure, wherein the bottom of the piston sleeve achieves the effect of bearing the upward pressure. According to the need, a user sets the magnitude of the desired outlet pressure by regulating the magnitude of spring force through the regulating rod. Under the effect of the spring force, the valve rod is enabled to move up and down, and at this moment the valve seat moves up and down between the second region and the valve port. When the valve seat moves to the lowest bottom end, an opening degree of the valve port is the largest and at this moment the outlet pressure of the second region becomes small; when the valve seat moves up, the opening degree of the valve port becomes small and at this moment the outlet pressure of the second region becomes great; and until the magnitude of the outlet pressure reaches a desired value, the valve rod stops moving and the pressure regulating valve is in a balanced state.

At the beginning of the design of the balanced valve element product, according to the actual need, the magnitude of the force produced by the inlet pressure to the valve seat may be changed by changing a contact area between the bottom of the piston sleeve and the inlet gas pressure (or inlet liquid pressure), so as to satisfy the actual need. At the beginning of the design of the pressure regulating valve product, according to the actual need, the size of the diaphragm may be adjusted to find the most suitable diaphragm size to output the magnitude of the desired outlet pressure.

It needs to be stated that, in this text, terms "comprise" and "include" or any other variants thereof are intended to cover non-exclusive inclusion, such that processes, methods, commodities or apparatuses comprising a series of elements not only comprise those elements, but also comprise other elements which are not clearly listed, or further comprise elements inherent to these processes, methods, commodities or apparatuses. Under the situation of no more limitation, elements defined by a statement "comprise a ..." do not exclude additional identical elements existing in the processes, methods, commodities or apparatuses of the described elements.

Although terms such as "first", "second" and "third" and the like may be used here to describe various components, parts or portions, these components, parts or portions shall not be limited by these terms; and these terms shall be only used for distinguishing a component, part or portion. When terms such as "first", "second" and other numeric terms are used here, no sequence or order is indicated, unless otherwise it is clearly pointed out in the context. Therefore, the first component, part or portion described below may be explained as the term first component, part or portion without departing from the description of the exemplary embodiments.

The above-mentioned embodiments are just the preferred embodiments of the present invention and are not used for limiting the protection scope of the present invention. Any modification, equivalent replacement, improvement and the like made within the scope of the present invention shall be included in the protection of the present invention.

## Claims

1. A pressure regulating valve, comprising:
a valve body (2) provided with an inlet (21), an outlet (22), and a valve cavity (23) in communication with the inlet (21) and the outlet (22);
a balanced valve element, the balanced valve element comprising:
a valve rod (11) having a first end (111) and a second end (112), the valve rod (11) defining a longitudinal axis extending between the first end (111) and the second end (112);
a piston sleeve (12) fixed on the valve rod (11);
a fixing member (14) arranged between the valve rod (11) and the piston sleeve (12), the fixing member (14) extending in a direction parallel to the longitudinal axis of the valve rod (11) and
a valve seat (13) fixed to the second end (112) of the valve rod (11),
wherein the piston sleeve (12) comprises a sleeve body (121), a bottom (122) and a first gap (A) arranged between an inner wall of the sleeve body (121) of the piston sleeve (12) and an outer wall of the valve rod (11), the bottom (122) of the piston sleeve (12) is fixed on the valve rod (11); and
an actuator fixedly connected to the valve body (2), the actuator coupled to the valve rod (11) to move the valve seat (13) within the valve cavity (23) to control fluid flow through the valve body (2), wherein the actuator comprises:
a pressure regulating means (331, 332);
a diaphragm cap assembly comprising a first diaphragm cap (311) and a second diaphragm cap (312), the first diaphragm cap (311) being connected to the pressure regulating means (331, 332), the second diaphragm cap (312) being connected to the valve body (2), and the first diaphragm cap (311) mating with the second diaphragm cap (312) to form a hollow internal portion;
a diaphragm assembly comprising a diaphragm (321), the diaphragm (321) being located between the first diaphragm cap (311) and the second diaphragm cap (312); and
wherein the pressure regulating means comprises a spring (331),
**characterized in that** the pressure regulating means further comprises a regulating rod (332), wherein the spring (331) is located inside of the first diaphragm cap (311) and the regulating rod (332) is fixed to the first diaphragm cap (311), and wherein the regulating rod (332) has a third end (3321) that penetrates through the first diaphragm cap (311) and is in contact to the spring (331), and a fourth end (3322) that is suspended.

2. The pressure regulating valve according to claim 1, **characterized in that** a first sealing part (15) is arranged between the fixing member (14) and the sleeve body (121) of the piston sleeve (12).

3. The pressure regulating valve according to claim 1 or 2, **characterized in that** the fixing member (14) is fixedly connected onto the actuator.

4. The pressure regulating valve according to any one of claims 1 to 3, **characterized in that** the fixing member (14) is fixed on the second diaphragm cap (312).

5. The pressure regulating valve according to any one of claims 1 to 4, **characterized in that** the pressure regulating valve further comprises a guide sleeve (17) which is fixed to the second diaphragm cap (312), and the guide sleeve (17) is a ring which surrounds a cross section of the valve rod (11).

6. The pressure regulating valve according to any one of claims 1 to 5, **characterized in that** the pressure regulating valve further comprises a guide sleeve (17) which is located on an outer circumference of the valve rod (11).

7. The pressure regulating valve according to claim 5 or 6, **characterized in that** the pressure regulating valve comprises at least two guide sleeves (17).

8. The pressure regulating valve according to any one of claims 1 to 7, **characterized in that** the bottom (122) of the piston sleeve (12) comprises an extension portion (123) that extends outwardly in a direction along the longitudinal axis of the valve rod (11).

9. The pressure regulating valve according to any one of claims 1 to 8, **characterized in that** the valve rod (11) and the piston sleeve (12) are integrally molded.

10. The pressure regulating valve according to any one of claims 1 to 9, **characterized in that** a second sealing part (16) is arranged at a junction between the valve rod (11) and the bottom (122) of the piston sleeve (12).

## Patentansprüche

1. Druckregulierventil mit:
einem Ventilkörper (2), der mit einem Einlass (21), einem Auslass (22) und einer Ventilkavität (23) in Kommunikation mit dem Einlass (21) und dem Auslass (22) bereitgestellt ist,
einem ausbalancierten Ventilelement, wobei das ausbalancierte Ventilelement aufweist:
eine Ventilstange (11) mit einem ersten Ende (111) und einem zweiten Ende (112), wobei die Ventilstange (11) eine Längsachse definiert, die sich zwischen dem ersten Ende (111) und dem zweiten Ende (112) erstreckt,
eine Kolbenhülse (12), die an der Ventilstange (11) befestigt ist,
ein Befestigungselement (14), das zwischen der Ventilstange (11) und der Kolbenhülse (12) angeordnet ist, wobei das Befestigungselement (14) sich in einer Richtung parallel zu der Längsachse der Ventilstange (11) erstreckt, und
einen Ventilsitz (13), der an dem zweiten Ende (112) der Ventilstange (11) befestigt ist,
wobei die Kolbenhülse (12) aufweist einen Hülsenkörper (121), einen Boden (122) und eine erste Lücke (A), die zwischen einer Innenwand des Hülsenkörpers (121) der Kolbenhülse (12) und
einer Außenwand der Ventilstange (11) angeordnet ist, wobei der Boden (122) der Kolbenhülse (12) an der Ventilstange (11) befestigt ist, und
einem Aktuator, der mit dem Ventilkörper (2) fest verbunden ist, wobei der Aktuator mit der Ventilstange (11) gekuppelt ist, um den Ventilsitz (13) in der Ventilkavität (23) zu bewegen, um Fluidfluss durch den Ventilkörper (2) zu steuern, wobei der Aktuator aufweist:
ein Druckreguliermittel (331, 332),
eine Membrankappeneinrichtung mit einer ersten Membrankappe (311) und einer zweiten Membrankappe (312), wobei die erste Membrankappe (311) mit dem Druckreguliermittel (331, 332) verbunden ist, wobei die zweite Membrankappe (312) mit dem Ventilkörper (2) verbunden ist, und wobei die erste Membrankappe (311) mit der zweiten Membrankappe (312) zusammenpasst, um einen hohlen Innenabschnitt zu bilden, eine Membraneinrichtung mit einer Membran (312), wobei die Membran (321) zwischen der ersten Membrankappe (311) und der zweiten Membrankappe (312) angeordnet ist, und
wobei das Druckreguliermittel eine Feder (331) aufweist, **dadurch gekennzeichnet, dass** das Druckreguliermittel ferner aufweist eine Regulierstange (332), wobei die Feder (331) im Inneren der ersten Membrankappe (311) angeordnet ist und die Regulierstange (332) an der ersten Membrankappe (311) befestigt ist, und wobei die Regulierstange (332) ein drittes Ende (3321), das durch die erste Membrankappe (311) hindurchtritt und in Kontakt mit der Feder (331) ist, und ein viertes Ende (3322) hat, das eingehängt ist.

2. Druckregulierventil gemäß Anspruch 1, **dadurch gekennzeichnet, dass** ein erstes Dichtungsteil (15) zwischen dem Befestigungselement (14) und dem Hülsenkörper (121) der Kolbenhülse (12) angeordnet ist.

3. Druckregulierventil gemäß Anspruch 1 oder 2, **dadurch gekennzeichnet, dass** das Befestigungselement (14) mit dem Aktuator fest verbunden ist.

4. Druckregulierventil gemäß irgendeinem der Ansprüche 1 bis 3, **dadurch gekennzeichnet, dass** das Befestigungselement (14) an der zweiten Membrankappe (312) befestigt ist.

5. Druckregulierventil gemäß irgendeinem der Ansprüche 1 bis 4, **dadurch gekennzeichnet, dass** das Druckregulierventil ferner aufweist eine Führungshülse (17), welche an der zweiten Membrankappe (312) befestigt ist, wobei die Führungshülse (17) ein Ring ist, welcher einen Querschnitt der Ventilstange (11) umgibt.

6. Druckregulierventil gemäß irgendeinem der Ansprüche 1 bis 5, **dadurch gekennzeichnet, dass** das Druckregulierventil ferner aufweist eine Führungshülse (17), welche an einem Außenumfang der Ventilstange (11) angeordnet ist.

7. Druckregulierventil gemäß Anspruch 5 oder 6, **dadurch gekennzeichnet, dass** das Druckregulierventil aufweist wenigstens zwei Führungshülsen (17).

8. Druckregulierventil gemäß irgendeinem der Ansprüche 1 bis 7, **dadurch gekennzeichnet, dass** der Boden (122) der Kolbenhülse (12) aufweist einen Verlängerungsabschnitt (123), der sich in einer Richtung entlang der Längsachse der Ventilstange (11) nach außen erstreckt.

9. Druckregulierventil gemäß irgendeinem der Ansprüche 1 bis 8, **dadurch gekennzeichnet, dass** die Ventilstange (11) und die Kolbenhülse (12) integral geformt sind.

10. Druckregulierventil gemäß irgendeinem der Ansprüche 1 bis 9, **dadurch gekennzeichnet, dass** ein zweites Dichtungsteil (16) in einer Verbindungstelle zwischen der Ventilstange (11) und dem Boden (122) der Kolbenhülse (12) angeordnet ist.

## Revendications

1. Soupape de régulation de pression, comprenant :
un corps de soupape (2) pourvu d'une entrée (21), d'une sortie (22) et d'une cavité de soupape (23) en communication avec l'entrée (21) et la sortie (22) ;
un élément de soupape équilibrée, l'élément de soupape équilibré comprenant :
une tige de soupape (11) ayant une première extrémité (111) et une deuxième extrémité (112), la tige de soupape (11) définissant un axe longitudinal s'étendant entre la première extrémité (111) et la deuxième extrémité (112) ;
un manchon de piston (12) fixé sur la tige de soupape (11) ;
un élément de fixation (14) agencé entre la tige de soupape (11) et le manchon de piston (12), l'élément de fixation (14) s'étendant dans une direction parallèle à l'axe longitudinal de la tige de soupape (11) et
un siège de soupape (13) fixé à la deuxième extrémité (112) de la tige de soupape (11),
dans lequel le manchon de piston (12) comprend un corps de manchon (121), un fond (122) et un premier espace (A) agencé entre une paroi intérieure du corps de manchon (121) du manchon de piston (12) et une paroi extérieure de la tige de soupape (11), le fond (122) du manchon de piston (12) est fixé sur la tige de soupape (11) ; et
un actionneur connecté de manière fixe au corps de soupape (2), l'actionneur couplé à la tige de soupape (11) pour déplacer le siège de soupape (13) à l'intérieur de la cavité de soupape (23) afin de commander un écoulement de fluide à travers le corps de soupape (2), dans lequel l'actionneur comprend :
des moyens de régulation de pression (331, 332) ;
un ensemble de capuchons de diaphragme comprenant un premier capuchon de diaphragme (311) et un second capuchon à diaphragme (312), le premier capuchon de diaphragme (311) étant connecté aux moyens de régulation de pression (331, 332), le second capuchon de diaphragme (312) étant connecté au corps de soupape (2), et le premier capuchon de diaphragme (311) s'appariant au second capuchon de diaphragme (312) pour former une partie interne creuse ;
un ensemble de diaphragme comprenant un diaphragme (321), le diaphragme (321) étant situé entre le premier capuchon de diaphragme (311) et le second capuchon de diaphragme (312) ; et
dans lequel les moyens de régulation de pression comprennent un ressort (331),
**caractérisée en ce que** les moyen de régulation de pression comprennent en outre une tige de régulation (332), dans laquelle le ressort (331) est situé à l'intérieur du premier capuchon de diaphragme (311) et la tige de régulation (332) est fixée au premier capuchon de diaphragme (311) et dans laquelle la tige de régulation (332) a une troisième extrémité (3321) qui pénètre à travers le premier capuchon de diaphragme (311) et est en contact avec le ressort (331), et une quatrième extrémité (3322) qui est suspendue.

2. Soupape de régulation de pression selon la revendication 1, **caractérisée en ce qu'**une première partie d'étanchéité (15) est agencée entre l'élément de fixation (14) et le corps de manchon (121) du manchon de piston (12).

3. Soupape de régulation de pression selon la revendication 1 ou 2, **caractérisée en ce que** l'élément de fixation (14) est connecté de manière fixe sur l'actionneur.

4. Soupape de régulation de pression selon l'une quelconque des revendications 1 à 3, **caractérisée en ce que** l'élément de fixation (14) est fixé sur le second capuchon de diaphragme (312).

5. Soupape de régulation de pression selon l'une quelconque des revendications 1 à 4, **caractérisée en ce que** la soupape de régulation de pression comprend en outre un manchon de guidage (17) qui est fixé au second capuchon de diaphragme (312), et le manchon de guidage (17) est une bague qui entoure une section transversale de la tige de soupape (11).

6. Soupape de régulation de pression selon l'une quelconque des revendications 1 à 5, **caractérisée en ce que** la soupape de régulation de pression comprend en outre un manchon de guidage (17) qui est situé sur une circonférence extérieure de la tige de soupape (11).

7. Soupape de régulation de pression selon la revendication 5 ou 6, **caractérisée en ce que** la soupape de régulation de pression comprend au moins deux manchons de guidage (17).

8. Soupape de régulation de pression selon l'une quelconque des revendications 1 à 7, **caractérisée en ce que** le fond (122) du manchon de piston (12) comprend une partie d'extension (123) qui s'étend vers l'extérieur dans une direction le long de l'axe longitudinal de la tige de soupape (11).

9. Soupape de régulation de pression selon l'une quelconque des revendications 1 à 8, **caractérisée en ce que** la tige de soupape (11) et le manchon de piston (12) sont moulés d'un seul tenant.

10. Soupape de régulation de pression selon l'une quelconque des revendications 1 à 9, **caractérisée en ce qu'**une seconde partie d'étanchéité (16) est agencée à une jonction entre la tige de soupape (11) et le fond (122) du manchon de piston (12).
